# EUROPÄISCHE PATENTSCHRIFT

(11) **EP 1 331 419 B1**
(45) Veröffentlichungstag und Bekanntmachung des Hinweises auf die Patenterteilung: **24.12.2008**
(21) Anmeldenummer: 03001513.5
(22) Anmeldetag: 23.01.2003
(51) Int. Cl.: F16G 13/16

(54) **Führungskette**
Guide chain
Chaîne de guidage

(30) Priorität: 29.01.2002 DE 10203533
(43) Veröffentlichungstag der Anmeldung: 30.07.2003
(73) Patentinhaber: FLEXATEC GmbH, 63456 Hanau (DE)
(72) Erfinder: von Eiff, Andreas, 63456 Hanau (DE)
(74) Vertreter: Grimm, Ekkehard

(56) Entgegenhaltungen:
- DE-A- 3 703 240
- DE-A- 4 313 082
- DE-U- 29 715 049
- US-A- 4 392 344

## Beschreibung

Die vorliegende Erfindung betrifft eine Führungskette mit mehreren gelenkig miteinander verbundenen Kettengliedern, die jeweils ein Kastenprofil aufweisen, gebildet im Wesentlichen aus zwei gegenüberliegenden Laschen und mindestens einem die Laschen auf Abstand haltenden Quersteg, wobei mindestens ein Kettenglied zwei Befestigungsteile zum ortsfesten Befestigen dieses Kettenglieds, wobei jeweils eines davon einer seiner Laschen auf der Außenseite zugeordnet ist, aufweist, und das jeweilige Befestigungsteil ein hülsenartiges Anschlusselement umfasst,

Solche Führungsketten sind allgemein bekannt und unter anderem in der DE-PS 37 03 240 beschrieben.

Führungsketten, auch als Energieketten oder Energieführungsketten bezeichnet, dienen zum Führen von flexiblen Leitungen und Schläuchen aller Art von einem Festanschlusspunkt zu einem beweglichen oder verfahrbaren Abnehmer hin. Derartige Führungsketten umfassen eine Anzahl von einzelnen, gelenkig miteinander verbundenen Kettengliedern. Solche Kettenglieder sind aus zwei parallel verlaufenden Laschenteilen, die mit mindestens einem Quersteg verbunden sind, aufgebaut, so dass sich ein Hohlprofil innerhalb des Kettenglieds ergibt, durch das die Leitungen und Schläuche geführt werden. Für die gelenkige Verbindung weist jede Lasche an dem einen Ende einen Zapfen und an dem anderen Ende ein Gelenkauge auf, so dass sich die jeweiligen hintereinander angeordneten Kettenglieder mit den Zapfen und den Augen verbinden.

Die Länge dieser Führungsketten können sehr unterschiedlich sein; um die erforderlichen Kettenlängen zu erzielen, wird eine entsprechende Anzahl von Kettengliedern aneinandergereiht. Für die Installation dieser Führungskette ist es dann erforderlich, dass das Anfangs- und/oder das End-Kettenglied fixiert werden, d.h. zum einen an einer festen Anschlussstelle und zum anderen an einem beweglichen Abnehmer. Bei sehr langen Ketten kann es auch erforderlich sein, die Kette entlang ihrer Länge an bestimmten Punkten zu fixieren. Für eine solche Befestigung der Führungskette werden entweder spezielle Kettenglieder eingesetzt, die fest angeformte Befestigungselemente aufweisen, wie dies beispielsweise in der vorstehend angeführten DE-PS 37 03 240 der Fall ist. Eine andere Maßnahme zum Fixieren der Kettenglieder, insbesondere am Anfang und am Ende der Führungskette, ist diejenige, Metallteile, entweder komplette Platten oder U-förmige Teile, an dem End-Kettenglied, das üblicherweise aus Kunststoff gespritzt ist, zu befestigen und damit die Führungskette zu fixieren.

Es ist ersichtlich, dass ein solches Befestigen der Führungskette an dem Anfangs- und End-Kettenglied speziell ausgebildete Kettenglieder erfordert, die einen erheblichen Fertigungsaufwand darstellen, insbesondere im Hinblick darauf, dass diese Befestigungs-Kettenglieder, im Vergleich zu den Kettengliedern der gesamten Führungskette, nur in geringen Stückzahlen benötigt werden. Falls die Führungskette in einem mittleren Abschnitt fixiert werden muss, müssen an der entsprechenden Stelle die normalen Kettenglieder der Führungskette gegen ein speziell ausgebildetes Kettenglied mit Befestigungsteilen ausgetauscht werden. Gerade eine solche Maßnahme ist sehr arbeitsintensiv und eine Änderung, auch versuchsweise, um eine entsprechende Anordnung aufzubauen, ist mit einem erheblichen Aufwand verbunden.

Die DE 297 15 049 U beschreibt ein Anschlusselement für Energieführungsrohre und Energieführungsketten aus gelenkig miteinander verbundenen Kettengliedern mit zwei parallelen Laschen, die in ihren Gelenkbereichen Löcher bzw. nach außen vorstehende Zapfen zur schwenkbaren Befestigung an den Zapfen bzw. in den Löchern der anschließenden Laschen aufweisen, das mit einer Lasche des jeweils letzten Kettenglieds verbindbar ist und Befestigungsmittel (Bohrungen) zur Befestigung an einer festen Basis oder einem beweglichen Mitnehmer des Energieführungsrohrs bzw. der Energieführungskette aufweist. Das Anschlusselement weist an einer Seite einen Zapfen zur Befestigung in einem Loch und auf der anderen Seite, dem Zapfen gegenüberliegend, ein Loch zur Befestigung an einem Zapfen der Lasche des letzten Kettenglieds auf. Eine solche Führungskette weist die Merkmale des Oberbegriffs des Anspruchs 1 auf.

Die US-U-4 392 344 weist einen aus einzelnen Gliedern aufgebauten Kabelträger bzw. -kanal auf. Um das eine Ende dieses Kabelträgers ortsfest zu befestigen, sind zwei winkelförmige Laschenteile vorgesehen, wobei der eine Schenkel des jeweiligen Laschenteils an der einen bzw. der anderen Seite des letzten Glieds des Kabelträgers angeschraubt wird, während der jeweilige, sich rechtwinklig zu diesem Schenkel erstreckende andere Schenkel an einer Montagefläche verschraubt wird.

Der vorliegenden Erfindung liegt die Aufgabe zugrunde, eine Führungskette der eingangs genannten Art so auszugestalten, dass sie eine Fixierung einzelner Kettenglieder der Führungskette, neben einem Anfangs- und einem End-Kettenglied, auch eines Zwischen- oder mittleren Kettenglieds, ermöglicht, auch dann, wenn eine solche Führungskette bereits installiert ist und flexible Versorgungsleitungen darin führt, ohne dass dazu eine solche Führungskette zerlegt werden muss, und bei der auch die Möglichkeit gegeben ist, eine zunächst eingerichtete Fixierung eines Kettenglieds einfach zu ändern, indem ein anderes Kettenglied fixiert wird.

Gelöst wird diese Aufgabe bei einer Führungskette der eingangs genannten Art dadurch, dass das jeweilige Anschlusselement als gesondertes Bauteil ausgebildet ist, dass die Lasche an ihrem oberen und/oder unteren Rand eine Aussparung aufweist, und dass das Halteelement ein hakenförmiges Teil an seinem oberen und/oder unteren Ende aufweist, das sich in die entsprechende Aussparung an dem oberen und/oder unteren Rand der Lasche einlegt und, die Lasche auf der Innenseite hintergreifend, verhakt.

Wesentlich ist, dass das jeweilige Befestigungsteil als gesondertes Bauteil ausgebildet wird und an der Außenseite des zu befestigenden Kettenglieds aufgesetzt und fixiert wird. Um ein solches Befestigungsteil an dem vorgesehenen Kettenglied anzuordnen, ist es nicht erforderlich, die Führungskette zu zerlegen, um einzelne Kettenglieder auszutauschen; vielmehr können solche Befestigungsteile wahlweise angebracht, wieder abgenommen und an anderer Stelle, d.h. an einem anderen Kettenglied, fixiert werden. Auch der Fertigungsaufwand kann als gering bezeichnet werden, da nur die Befestigungsteile beispielsweise aus Kunststoff gespritzt werden müssen.

Ein zusätzlicher Halt ist dadurch gegeben, dass das Halteelement als hakenförmiges Teil ausgebildet ist. Ein solches hakenförmiges Teil wird verhakt, indem es die Lasche im Bereich des oberen Rands oder des unteren Rands der Lasche übergreift. Mit dieser Ausbildung wird das entsprechende Befestigungsteil an der Lasche, dieser fest zugeordnet, gehalten, und bildet dadurch einen festen Bestandteil des entsprechenden Kettenglieds. Das Befestigungsteil kann jederzeit wieder von dem Kettenglied gelöst werden, indem die hakenförmigen Teile aus ihrem Eingriff mit der Lasche gelöst werden, so dass das Befestigungsteil von der Lasche abgenommen werden kann.

Um die Abmessungen der Lasche, gerade beim Einsatz solcher hakenförmigen Halteelemente, nicht zu vergrößern, ist an dem oberen und/oder unteren Rand der Lasche eine Aussparung vorgesehen, in der das hakenförmige Teil einliegt.

Vorzugsweise weist jedes Befestigungsteil vier Halteelemente auf.

Um die Haltekräfte gleichförmig zu verteilen, können die Halteelemente jeweils paarweise dem oberen und dem unteren Rand der Lasche zugeordnet werden.

Das hülsenförmige Anschlusselement kann eine Bohrung aufweisen, die einen Befestigungsbolzen oder eine Befestigungsschraube aufnimmt, wobei die Achse der Bohrung senkrecht zur Längserstreckung des Kettenglieds angeordnet ist. Alternativ kann das hülsenförmige Anschlusselement auch eine Bohrung aufweisen, die parallel zur Längserstreckung des Kettenglieds angeordnet ist; diese Ausgestaltung ermöglicht beispielsweise eine stirnseitige Befestigung eines End-Kettenglieds.

Unter spritztechnischen Aspekten besitzt das hülsenförmige Anschlusselement vorzugsweise einen U-förmigen Querschnitt, wobei der Innenraum des Querschnitts zusammen mit der Außenseite der Lasche eine Bohrung zur Aufnahme eines Befestigungsbolzens oder einer Befestigungsschraube bildet.

Die Bohrungen, die einen Befestigungsbolzen aufnehmen, können zwei abgestufte, unterschiedliche Bohrungsdurchmesser aufweise, so dass sich der Kopf eines Befestigungsbolzens in den größeren Bohrungsdurchmesser einlegt und somit nicht über das Befestigungsteil vorsteht.

Es sind Kettenglieder bekannt, die einen die Laschen verbindenden Klappbügel aufweisen, der in jeweils einer Aussparung in der Kante der Lasche einliegt. Diese Klappbügel werden bei solchen Kettengliedern geöffnet, um die zu führenden Leitungen und Kabel in die Führungskette einlegen zu können. Gerade in Verbindung mit solchen Kettengliedern mit Klappbügel ist vorgesehen, dass die Aussparungen zur Aufnahme des Klappbügels, anstelle des Klappbügels, das (die) hakenförmige(n) Teil(e) des jeweils zugeordneten Halteelements aufnehmen.

Die vorstehend beschriebene Führungskette bietet insbesondere folgende Vorteile:

Die einzelnen Anschlusselemente sind an jedem Kettenglied, an beliebiger Stelle entlang der Führungskette, nachträglich montierbar.

Insbesondere dann, wenn Klemmteile zum Halten der Befestigungsteile vorgesehen sind, ist eine schnelle und leichte Montage an dem entsprechenden Kettenglied der Führungskette möglich, indem die Befestigungsteile aufgeklemmt werden.

Weiterhin ergeben sich an den einzelnen Kettengliedern, insbesondere auch an den End-Kettengliedern, durch die angegebenen Befestigungsteile identische Bohrmaße.

Durch die Befestigungselemente, die sich auf die Außenseite der Laschen der Kettenglieder aufsetzen, stehen keine Teile der Anschlusselemente in den Innenraum der Kette vor, so dass der gesamte Querschnitt der Kettenglieder zur Aufnahme von Versorgungsleitungen und -schläuchen ausgenutzt werden kann.

Als weiterer wesentlicher Punkt ist anzuführen, dass die Führungskette durch das Anbringen der Befestigungsteile auf den Außenseiten der Laschen, als gesonderte Bauteile, die Kettenglieder in ihrer Steifigkeit nicht beeinflussen, so dass dadurch das gesamte Biegeverhalten der Führungskette nicht beeinträchtigt wird.

Weiterhin sind die Befestigungsschrauben oder -bolzen von beiden Seiten einer Bohrung, die in dem Befestigungselement ausgebildet sind, einsetzbar, d.h. von oben oder von unten bei vertikal verlaufender Bohrungsachse, so dass die Führungskette sowohl im Innenals auch im Außenradius montierbar ist. Bei speziellen Anforderungen können insbesondere an den Kettenenden mehrere Kettenglieder mit Befestigungsteilen für eine Befestigung ausgerüstet werden.

Da üblicherweise unterschiedliche Kettenbreiten für die jeweiligen Einsatzbereiche solcher Führungsketten vorgesehen sind, können die angegebenen, außen auf die Laschen aufgesetzten Befestigungsteile unabhängig der Breite der Führungsketten universell verwendet werden.

Falls an einer Führungskette weitere Kettenglieder nachträglich fixiert werden müssen, können die Befestigungsteile jederzeit an dem entsprechenden Kettenglied angebracht werden.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: eine perspektivische Ansicht des Endes einer Führungskette mit mehreren Kettengliedern, wobei das End-Kettenglied mit Befestigungsteilen fixiert werden kann;
- Figur 2: eine vergrößerte Seitenansicht eines Befestigungsteils, wie es in Figur 1 dargestellt ist;
- Figur 3: eine Draufsicht auf das Befestigungsteil der Figur 2 aus Richtung des Sichtpfeils III in Figur 2; und
- Figur 4: eine Ausführungsform eines Befestigungsteils mit vertikal verlaufender Bohrung zur Aufnahme einer Befestigungsschraube.

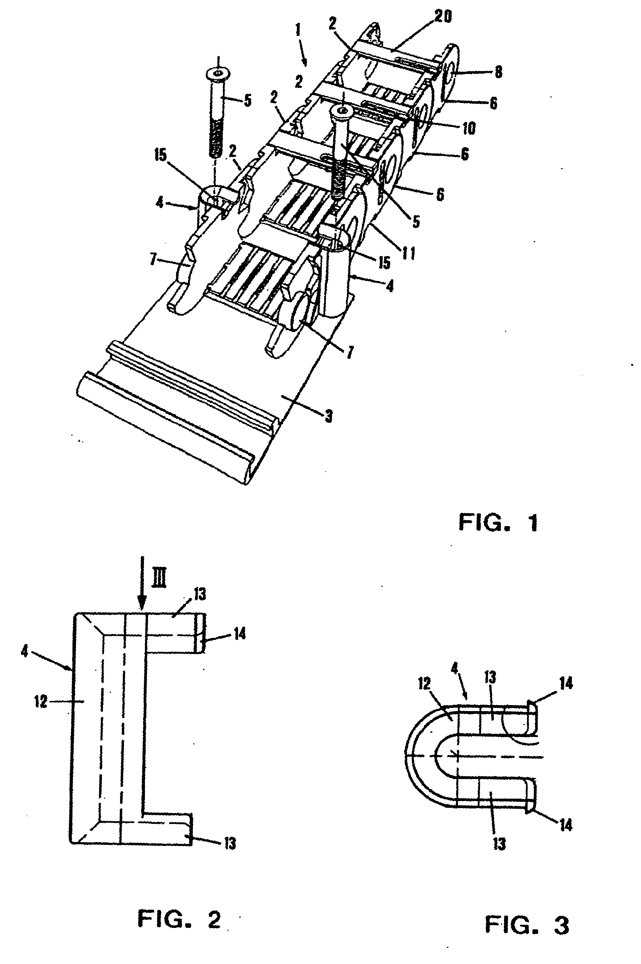

In Figur 1 ist der Endabschnitt einer Führungskette 1 gezeigt, wobei das vordere End-Kettenglied 2 an einer ortsfesten Platte 3 mittels zwei Befestigungsteilen 4 über Schrauben 5 fixiert ist. Jedes einzelne Kettenglied 2 ist aus zwei parallel verlaufenden Laschen 6, mit jeweils einem Gelenkzapfen 7 an dem einen Ende und einem Gelenkauge 8 an dem anderen Ende, sowie einem unteren, die beiden Laschen auf Abstand haltenden Quersteg aufgebaut; an der Oberseite sind die beiden Laschen 6 über einen Klappbügel 20 verbunden, der im Bereich der oberen Kante der Laschen 6 in jeweils einer Aussparung 10 so einliegt, dass die Oberseite des Klappbügels 10 nicht über die obere Kante der Laschen 6 vorsteht. In Figur 1 ist auch zu erkennen, dass an der unteren Kante der Lasche 6, dem Quersteg 9 gegenüberliegend, jeweils eine untere Aussparung 11 vorhanden ist.

Es ist erforderlich, solche Führungskette, wie diejenige, die in einem Abschnitt in Figur 1 gezeigt ist, an den beiden End-Kettengliedern 2 im Bereich einer FestAnschlussstelle, beispielsweise der gezeigten ortsfesten Platte 3, und eines beweglichen Verbrauchers zu befestigen. Außerdem kann es erforderlich sein, die Kette an einer oder mehreren, weiteren Befestigungsstellen entlang der Kettenlänge ortsfest zu fixieren. Hierzu werden Befestigungsteile 4, wie sie im Bereich des End-Kettenglieds in Figur 1 zu sehen sind, seitlich auf die Außenseite der Lasche 6 des entsprechenden Kettenglieds 2 aufgeklemmt. Ein solches Befestigungsteil 4 ist in Figur 2, und zwar ein solches entsprechend dem linken Befestigungsteil 4 in Figur 1, in einer Seitenansicht sowie in Figur 3 in einer Draufsicht aus Richtung des Sichtpfeils III in Figur 2 gezeigt. Diese Befestigungsteile 4 umfassen ein hülsenförmiges Anschlusselement 12, das, wie anhand der Figur 3 zu sehen ist, einen U-oder rinnenförmigen Querschnitt aufweist. An dem oberen und unteren Ende des hülsenförmigen Anschlusselements 12 sind jeweils zwei Halteelemente 13 angeordnet, die Arme bilden. An den Enden der oberen Halteelemente 13 sind, seitlich nach außen vorstehend, hakenförmige Teile 14 ausgebildet.

Sowohl die einzelnen Kettenglieder 2 der Führungskette 1 als auch diese Befestigungsteile 4 sind aus Kunststoff gespritzte Teile.

Wie wiederum anhand der Figur 1 zu sehen ist, legen sich für eine klemmende Halterung der Befestigungsteile 4 die Halteelemente 13 in die obere Aussparung 10 bzw. die untere Aussparung 11 ein und die hakenförmige Teile 14 hintergreifen an den oberen Halteelementen 13 die Laschen 6 auf der Innenseite im Bereich der Aussparungen 10 bzw. 11. Nachdem die Befestigungsteile 4 an der Außenseite der Laschen 6 angeklemmt sind, ergänzen sich jeweils der Innenraum des hülsenförmigen Anschlusselements 12 und die Außenseite der Lasche 6 zu einer Bohrung 15, in der dann die Schrauben 5 aufgenommen werden.

Es ist ersichtlich, dass die Befestigungsteile 4 an beliebigen Kettengliedern 2 entlang der Führungskette 1 angeklemmt werden können, unabhängig davon, ob es sich bei den Kettengliedern um End-Kettenglieder 2 handelt oder um beliebige Zwischen-Kettenglieder über die Länge der Führungskette 1.

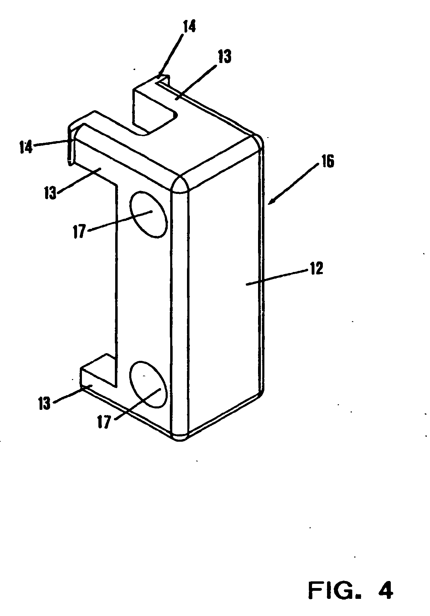

Während die Befestigungsteile 4, wie sie in den Figuren 1 bis 3 gezeigt sind, für eine senkrechte Anordnung der Befestigungsschrauben 5 durch den Verlauf der Bohrungen 15 vorgesehen sind, ist in der Figur 4 ein weiteres Befestigungsteil, mit dem Bezugszeichen 16 bezeichnet, gezeigt, das in seinem Grundaufbau dem Befestigungsteil 4 der Figuren 1 bis 3 entspricht; insofern sind auch für die einzelnen Bestandteile die entsprechenden Bezugszeichen verwendet. Zum Befestigen weist allerdings das Befestigungsteil 16 zwei vertikal verlaufende Bohrungen 17 auf und das hülsenförmige Anschlusselement 12 ist im Querschnitt rechteckig aufgebaut.

Wie anhand der Figuren 1 bis 4 zu erkennen ist, können die Schrauben 5 zum Befestigen durch die Bohrungen 15 und 17 von oben oder unten bzw. von vorne oder von hinten hindurch geführt werden, so dass eine große Variationsmöglichkeit bei der Befestigung und Fixierung sowohl der End-Kettenglieder als auch von Zwischenkettengliedern gegeben ist.

## Patentansprüche

1. Führungskette (1) mit mehreren gelenkig miteinander verbundenen Kettengliedern (2), die jeweils ein Kastenprofil aufweisen, gebildet im Wesentlichen aus zwei gegenüberliegenden Laschen (6) und mindestens einem die Laschen auf Abstand haltenden Quersteg (20), wobei mindestens ein Kettenglied (2) zwei Befestigungsteile (4) zum ortsfesten Befestigen dieses Kettenglieds (2), wobei jeweils eines davon einer seiner Laschen (6) auf der Außenseite zugeordnet ist, aufweist, und das jeweilige Befestigungsteil (4) ein hülsenartiges Anschlusselement (12) umfasst, **dadurch gekennzeichnet, dass** das jeweilige Anschlusselement (12) als gesondertes Bauteil ausgebildet ist, dass die Lasche (6) an ihrem oberen und/oder unteren Rand eine Aussparung (10, 11) aufweist und dass das Halteelement (13) ein hakenförmiges Teil (14) an seinem oberen und/oder unteren Ende aufweist, das sich in die entsprechende Aussparung an dem oberen und/oder unteren Rand der Lasche (6) einlegt und, die Lasche (6) auf der Innenseite hintergreifend, verhakt.

2. Führungskette nach Anspruch 1, **dadurch gekennzeichnet, dass** jedes Befestigungsteil (4) vier Halteelemente (13) aufweist.

3. Führungskette nach Anspruch 2, **dadurch gekennzeichnet, dass** die Halteelemente (13) jeweils paarweise dem oberen und dem unteren Rand der Lasche (6) zugeordnet sind.

4. Führungskette nach einem der Ansprüche 1 bis 3, **dadurch gekennzeichnet, dass** das hülsenförmige Anschlusselement (12) eine Bohrung (15) aufweist, die einen Befestigungsbolzen oder eine Befestigungsschraube (5) aufnimmt, wobei die Achse der Bohrung (15) senkrecht zur Längserstreckung des Kettenglieds (2) angeordnet ist.

5. Führungskette nach einem der Ansprüche 1 bis 4, **dadurch gekennzeichnet, dass** das hülsenförmige Anschlusselement (12) eine Bohrung (17) aufweist, die einen Befestigungsbolzen (5) oder eine Befestigungsschraube aufnimmt, wobei die Achse der Bohrung (17) parallel zur Längserstreckung des Kettenglieds (2) angeordnet ist.

6. Führungskette nach einem der Ansprüche 1 bis 5, **dadurch gekennzeichnet, dass** das hülsenförmige Anschlusselement (12) einen U-förmigen Querschnitt aufweist, wobei der Innenraum des Querschnitts zusammen mit der Außenseite der Lasche (6) eine Bohrung (15) zur Aufnahme eines Befestigungsbolzens oder einer Befestigungsschraube (5) bildet.

7. Führungskette nach einem der Ansprüche 1 bis 6, **dadurch gekennzeichnet, dass** das jeweilige hakenförmige Teil (14) seitlich nach außen vorsteht.

8. Führungskette nach Anspruch 5 oder 6, **dadurch gekennzeichnet, dass** die Bohrung (15; 17) zwei abgestufte, unterschiedliche Bohrungsdurchmesser aufweist.

9. Führungskette nach einem der Ansprüche 1 bis 8, **dadurch gekennzeichnet, dass** die Kettenglieder (2) jeweils einen die Laschen (6) verbindenden Klappbügel (20), einen Quersteg bildend, aufweisen, der in jeweils einer Aussparung (10) in der Kante der Lasche (6) einliegt, wobei diese Aussparungen (10), anstelle des Klappbügels (20), das (die) hakenförmige(n) Teil(e) (14) des jeweils zugeordneten Halteelements (13) bilden.

## Claims

1. A chain guide (1) comprising a plurality of hingedly interconnected chain links (2), each having a box-shaped profile, formed substantially by two opposing plates (6) and at least one cross web (20) keeping the plates apart, at least one chain link (2) comprising two fastening members (4) for the stationary fastening of said chain link (2), a respective one of said fastening members being assigned to one of its plates (6) on the outside, and the respective fastening member (4) including a sleeve-like connection element (12), **characterized in that** the respective connection element (12) is configured as a separate component, that the plate (6) is provided on its upper and/or lower edge with a recess (10, 11), and that the holding element (13) comprises a hooked member (14) on its upper and/or lower end, said member fitting into the corresponding recess on the upper and/or lower end of the plate (6) and getting hooked by engaging behind the plate (6) on the inside.

2. The guide chain according to claim 1, **characterized in that** each fastening member (4) comprises four holding elements (13).

3. The guide chain according to claim 2, **characterized in that** the holding elements (13) are each assigned in pairs to the upper and the lower edge of the plate (6).

4. The guide chain according to any one of claims 1 to 3, **characterized in that** the sleeve-like connection element (12) comprises a bore (15) which accommodates a fastening bolt or a fastening screw (5), the axis of the bore (15) being arranged in a direction perpendicular to the longitudinal extension of the chain link (2).

5. The guide chain according to any one of claims 1 to 4, **characterized in that** the sleeve-like connection element (12) comprises a bore (17) which accommodates a fastening bolt (5) or a fastening screw, the axis of the bore (17) being arranged in parallel with the longitudinal extension of the chain link (2).

6. The guide chain according to any one of claims 1 to 5, **characterized in that** the sleeve-like connection element (12) comprises a U-shaped cross-section, the interior of the cross-section forming, together with the outside of the plate (6), a bore (15) for accommodating a fastening bolt or a fastening screw (5).

7. The guide chain according to any one of claims 1 to 6, **characterized in that** the respective hooked member (14) protrudes laterally to the outside.

8. The guide chain according to claim 5 or 6, **characterized in that** the bore (15; 17) comprises two stepped and different bore diameters.

9. The guide chain according to any one of claims 1 to 8, **characterized in that** each of the chain links (2) comprises a hinged bracket (20) connecting the plates (6) and forming a cross web, which fits into a respective recess (10) in the edge of the plate (6), said recesses (10) forming, instead of the hinged bracket (20), the hooked member(s) of the respectively assigned holding element (13).

## Revendications

1. Chaîne de guidage (1) avec plusieurs maillons (2) reliés de manière articulée entre eux qui présentent respectivement un profil en caisson, formée essentiellement de deux languettes opposées (6) et au moins d'une traverse (20) maintenant les languettes à distance, au moins un maillon de chaîne (2) présentant deux pièces de fixation (4) pour une fixation solide de ce maillon de chaîne (2), dont respectivement l'un d'entre eux est associé à l'une des languettes (6) sur la face externe, et la partie de fixation respective (4) comprenant un élément de raccordement (12) en forme de douille, **caractérisée en ce que** l'élément de raccordement (12) est réalisé comme un composant séparé, **en ce que** la languette (6) présente sur son bord supérieur et/ou inférieur un évidement (10, 11) et **en ce que** l'élément de retenue (13) présente une partie (14) en forme de crochet sur son extrémité inférieure et/ou supérieure qui s'insère dans l'évidement correspondant sur le bord supérieur et/ou inférieur de la languette et accroche la languette (6) en la fixant par la face intérieure.

2. Chaîne de guidage selon la revendication 1, **caractérisée en ce que** chaque pièce de fixation (4) présente quatre éléments de retenue (13).

3. Chaîne de guidage selon la revendication 2, **caractérisée en ce que** les éléments de retenue (13) sont associés respectivement par paire au bord supérieur et inférieur de la languette (6).

4. Chaîne de guidage selon l'une des revendications 1 à 3, **caractérisée en ce que** l'élément de raccordement en forme de douille (12) présente un perçage (15) qui loge un boulon de fixation ou une vis de fixation (5), l'axe du perçage (15) étant disposé perpendiculairement à l'extension longitudinale du maillon de chaîne (2).

5. Chaîne de guidage selon l'une des revendications 1 à 4, **caractérisée en ce que** l'élément de raccordement en forme de douille (12) présente un perçage (17) qui loge un boulon de fixation ou une vis de fixation (5), l'axe du perçage (17) étant disposé parallèlement à l'extension longitudinale du maillon de chaîne (2).

6. Chaîne de guidage selon l'une des revendications 1 à 5, **caractérisée en ce que** l'élément de raccordement en forme de douille (12) présente une section transversale en forme de U, l'espace interne de la section transversale formant ensemble avec la face externe de la languette (6) un perçage (15) pour le logement d'un boulon de fixation ou d'une vis de fixation (5).

7. Chaîne de guidage selon l'une des revendications 1 à 6, **caractérisé en ce que** la partie respective en forme de crochet (14) fait saillie latéralement vers l'extérieur.

8. Chaîne de guidage selon la revendication 5 ou 6, **caractérisée en ce que** le perçage (15, 17) présente deux diamètres de perçage différents étagés.

9. Chaîne de guidage selon l'une des revendications 1 à 8, **caractérisé en ce que** les maillons de chaîne (2) présentent respectivement un étrier pliable (20) reliant les languettes (6), formant une traverse qui repose dans respectivement un évidement (10) dans le bord de la languette (6), ces évidements (10) formant à la place de l'étrier pliable (20) la(les) partie(s) formant crochet (14) de l'élément de retenue (13) respectivement associé.
